# EUROPEAN PATENT SPECIFICATION

(11) **EP 2 741 468 B1**
(45) Date of publication and mention of the grant of the patent: **13.06.2018**
(21) Application number: 13805215.4
(22) Date of filing: 01.04.2013
(51) Int. Cl.: H04L 29/06, H04W 4/02

(54) **METHOD FOR LABELLING USER DATA, TERMINAL DEVICE AND SERVER**
VERFAHREN ZUM KENNZEICHNEN VON BENUTZERDATEN SOWIE ENDGERÄT UND SERVER DAFÜR
PROCÉDÉ D'ÉTIQUETAGE DE DONNÉES D'UTILISATEUR, DISPOSITIF TERMINAL ET SERVEUR

(30) Priority: 25.09.2012 CN 201213609652
(43) Date of publication of application: 11.06.2014
(73) Proprietor: Huawei Technologies Co., Ltd., Longgang District Shenzhen, Guangdong 518129 (CN)
(72) Inventor: ZHANG, Gong, Shenzhen Guangdong 518129 (CN); JIN, Hongbo, Shenzhen Guangdong 518129 (CN)
(74) Representative: Isarpatent
(86) International application number: PCT/CN2013/073557
(87) International publication number: WO 2014/048101

(56) References cited:
- WO-A2-2012/009214
- CN-A- 101 350 153
- CN-A- 101 951 552
- JP-A- 2010 167 148
- US-A1- 2007 099 703
- US-A1- 2008 243 853
- US-A1- 2011 081 634
- US-A1- 2011 217 681

## Description

### TECHNICAL FIELD

The present invention relates to communication technologies, and in particular, to a user data annotation method, a terminal device, and a server.

### BACKGROUND

User behavior recognition is a process of collecting information about a user in a specific environment and inferring user behaviors or intentions. User-related information is primarily collected through a behavior sensor (such as an acceleration sensor, a gyroscope, and an electronic compass) carried by the user and a sensing sensor (such as a temperature sensor, a pressure sensor, and a luminance sensor) for sensing surroundings of the user.

With popularity of intelligent terminals, an intelligent terminal is equipped with more and more types of sensors. How to collect user-related information through the intelligent terminal carried by the user and infer user behaviors or intentions has become a hot topic of research nowadays. Generally, analyzing sensor information and inferring user behaviors or intentions are regarded as an issue of categorization. The key of this issue of categorization lies in annotation of training samples. The training samples refer to user behavior or intention information. That is, the key of analyzing sensor information and inferring user behaviors or intentions lies in annotating some behaviors or intentions of the user beforehand and using the annotation data as a basis of categorization. Currently, the user behavior recognition is based on experimental annotation data. The amount of the experimental annotation data is limited, which limits the application of user behavior recognition.

US20110081634 A1 refers to a behaviour pattern analysis system comprising: a mobile terminal acquires movement information, information on a current location, and information on a building, the mobile terminal analyses the movement information, and detects a first behaviour pattern, and then the mobile terminal transmits, to a server, the information on a building or buildings and the first behaviour pattern; the server analyses the information on a building or buildings and the first behaviour pattern, and detects a second behaviour pattern corresponding to the information on a building or buildings and the first behaviour pattern from multiple second behaviour patterns obtained by classifying behaviours performed by the user over a relatively long period of time.

US20080243853 A1 refers to a method, which may include receiving an access request from an inviting terminal requesting access to a social networking application, the access request may be associated with a user identifier, searching a contact database, based on the user identifier and on an application identifier of the social networking application, to identify contact information associated with an invitee terminal, and generating a notification message based on the contact information, the notification message may be useable to indicate to the invitee terminal that the inviting terminal has accessed the social networking application.

### SUMMARY

The invention is defined by the claims. The present invention provides a user data annotation method, a terminal device, and a server to increase the amount of annotation data and overcome the limitation on the application of user behavior recognition.

In a first aspect, a user data annotation method is provided, including:
receiving, by a server, location information of a first user corresponding to a first terminal device, behavior information of the first user, and sensor data of each sensor on the first terminal device, which are sent by the first terminal device in a process of a game; and
annotating, by the server, the location information of the first user, the behavior information of the first user, and the sensor data to obtain annotation data of the first user.

In a first possible implementation manner of the first aspect, the receiving, by a server, location information of a first user corresponding to a first terminal device, behavior information of the first user, and sensor data of each sensor on the first terminal device, which are sent by the first terminal device in a process of a game includes:
receiving, by the server, the location information of the first user, the behavior information of the first user, and the sensor data of each sensor on the first terminal device, which are sent by the first terminal device at an initial stage of the game, where the location information of the first user and the behavior information of the first user are input by the first user into the first terminal device according to a prompt at the initial stage of the game.

In a second possible implementation manner of the first aspect, the receiving, by a server, location information of a first user corresponding to a first terminal device, behavior information of the first user, and sensor data of each sensor on the first terminal device, which are sent by the first terminal device in a process of a game includes:
receiving, by the server, the sensor data of each sensor on the first terminal device, which is sent by the first terminal device at an initial stage of the game;
predicting, by the server, candidate user location information and candidate user behavior information according to the sensor data;
sending, by the server, the candidate user location information and the candidate user behavior information to the first terminal device so that the first user makes a selection; and
receiving, by the server, the location information of the first user and the behavior information of the first user that are returned by the first terminal device, where the location information of the first user is selected by the first user from the candidate user location information through the first terminal device, and the location information of the first user is selected by the first user from the candidate user behavior information through the first terminal device.

With reference to the second possible implementation manner of the first aspect, in a third possible implementation manner of the first aspect, the predicting, by the server, candidate user location information and candidate user behavior information according to the sensor data includes:
obtaining, by the server according to the sensor data, sensor data for location prediction and sensor data for behavior prediction that correspond to the first user; and
recognizing, by the server according to a pre-stored mapping relationship between semantic locations and behaviors and the sensor data, the sensor data for location prediction and the sensor data for behavior prediction to obtain the candidate user location information and the candidate user behavior information.

With reference to the first aspect, or the first possible implementation manner of the first aspect, or the second possible implementation manner of the first aspect, or the third possible implementation manner of the first aspect, in a fourth possible implementation manner of the first aspect, after the receiving, by a server, location information of a first user corresponding to a first terminal device, behavior information of the first user, and sensor data of each sensor on the first terminal device, which are sent by the first terminal device in a process of a game, the method includes:
receiving, by the server, identifier information of a second terminal device invited to the game, which is sent by the first terminal device in the process of the game;
sending, by the server, an invitation notification message to the second terminal device according to the identifier information of the second terminal device to notify the second terminal device of joining the game, and sending the location information of the first user to the second terminal device so that a third user corresponding to a third terminal device guesses a behavior of the first user, wherein the third terminal device is one terminal device of the at least one second terminal device, which joins the game; and
receiving, by the server, guessed behavior information sent by the third terminal device, comparing the behavior information of the first user with the guessed behavior information, and sending a comparison result to the third terminal device so that the third user knows a guess result.

In a second aspect, a user data annotation method is provided, including:
obtaining, by a first terminal device in a process of a game, location information of a first user corresponding to the first terminal device, behavior information of the first user, and sensor data of each sensor on the first terminal device; and
sending, by the first terminal device, the location information of the first user, the behavior information of the first user, and the sensor data to a server so that the server obtains annotation data of the first user.

In a first possible implementation manner of the second aspect, the obtaining, by a first terminal device in a process of a game, location information of a first user corresponding to the first terminal device, behavior information of the first user, and sensor data of each sensor on the first terminal device includes:
receiving, by the first terminal device at an initial stage of the game, the location information of the first user and the behavior information of the first user that are input by the first user according to a prompt at the initial stage of the game; and
obtaining, by the first terminal device, the sensor data at the initial stage of the game.

In a second possible implementation manner of the second aspect, the obtaining, by a first terminal device in a process of a game, location information of a first user corresponding to the first terminal device, behavior information of the first user, and sensor data of each sensor on the first terminal device includes:
obtaining, by the first terminal device, the sensor data at an initial stage of the game, and sending the sensor data to the server;
receiving, by the first terminal device, candidate user location information and candidate user behavior information that are returned by the server, where the candidate user location information and the candidate user behavior information are predicted by the server according to the sensor data;
displaying, by the first terminal device, the candidate user location information and the candidate user behavior information to the first user so that the first user makes a selection; and
receiving, by the first terminal device, a selection instruction input by the first user, where the selection instruction includes location information of the first user and behavior information of the first user that are respectively selected by the first user from the candidate user location information and the candidate user behavior information.

In a third possible implementation manner of the second aspect, the obtaining, by a first terminal device in a process of a game, location information of a first user corresponding to the first terminal device, behavior information of the first user, and sensor data of each sensor on the first terminal device includes:
obtaining, by the first terminal device, the sensor data at an initial stage of the game;
predicting, by the first terminal device, candidate user location information and candidate user behavior information according to the sensor data;
displaying, by the first terminal device, the candidate user location information and the candidate user behavior information to the first user so that the first user makes a selection; and
receiving, by the first terminal device, a selection instruction input by the first user, where the selection instruction includes location information of the first user and behavior information of the first user that are respectively selected by the first user from the candidate user location information and the candidate user behavior information.

With reference to the third possible implementation manner of the second aspect, in a fourth possible implementation manner of the second aspect, the predicting, by the first terminal device, candidate user location information and candidate user behavior information according to the sensor data includes:
obtaining, by the first terminal device according to the sensor data, sensor data for location prediction and sensor data for behavior prediction that correspond to the first user; and
recognizing, by the first terminal device according to a pre-stored mapping relationship between semantic locations and behaviors and the sensor data, the sensor data for location prediction and the sensor data for behavior prediction to obtain the candidate user location information and the candidate user behavior information.

In a third aspect, a server is provided, including:
a first receiving module, configured to receive location information of a first user corresponding to a first terminal device, behavior information of the first user, and sensor data of each sensor on the first terminal device, which are sent by the first terminal device in a process of a game; and
an annotation obtaining module, configured to annotate the location information of the first user, the behavior information of the first user, and the sensor data that are received by the first receiving module, so as to obtain annotation data of the first user.

In a first possible implementation manner of the third aspect, the first receiving module is specifically configured to receive the location information of the first user, the behavior information of the first user, and the sensor data of each sensor on the first terminal device, which are sent by the first terminal device at an initial stage of the game, where the location information of the first user and the behavior information of the first user are input by the first user into the first terminal device according to a prompt at the initial stage of the game.

In a second possible implementation manner of the third aspect, the first receiving module includes:
a first receiving unit, configured to receive the sensor data of each sensor on the first terminal device, which is sent by the first terminal device at an initial stage of the game;
a predicting unit, configured to predict candidate user location information and candidate user behavior information according to the sensor data after the first receiving unit receives the sensor data;
a sending unit, configured to send the candidate user location information and the candidate user behavior information to the first terminal device so that the first user makes a selection; and
a second receiving unit, configured to receive the location information of the first user and the behavior information of the first user that are returned by the first terminal device, where the location information of the first user is selected by the first user from the candidate user location information through the first terminal device, and the location information of the first user is selected by the first user from the candidate user behavior information through the first terminal device.

With reference to the second possible implementation manner of the third aspect, in a third possible implementation manner of the third aspect, the predicting unit is specifically configured to obtain, according to the sensor data, sensor data for location prediction and sensor data for behavior prediction that correspond to the first user, and recognize, according to a pre-stored mapping relationship between semantic locations and behaviors and the sensor data, the sensor data for location prediction and the sensor data for behavior prediction to obtain the candidate user location information and the candidate user behavior information.

With reference to the third aspect, or the first possible implementation manner of the third aspect, or the second possible implementation manner of the third aspect, or the third possible implementation manner of the third aspect, in a fourth possible implementation manner of the third aspect, the server further includes: a second receiving module, configured to: after the first receiving module receives the location information of the first user, the behavior information of the first user, and the sensor data, receive identifier information of a second terminal device invited to the game, which is sent by the first terminal device in the process of the game;
a first sending module, configured to send an invitation notification message to the second terminal device according to the identifier information of the second terminal device to notify the second terminal device of joining the game, and send the location information of the first user to the second terminal device so that a third user corresponding to a third terminal device guesses a behavior of the first user, wherein the third terminal device is one terminal device of the at least one second terminal device, which joins the game;
a third receiving module, configured to receive guessed behavior information sent by the third terminal device, and compare the behavior information of the first user with the guessed behavior information; and
a second sending module, configured to send a comparison result of the third receiving module to the third terminal device so that the third user knows a guess result.

In a fourth aspect, a first terminal device is provided, including:
an obtaining module, configured to obtain location information of a first user corresponding to the first terminal device, behavior information of the first user, and sensor data of each sensor on the first terminal device in a process of a game; and
a first sending module, configured to send the location information of the first user, the behavior information of the first user, and the sensor data to a server so that the server obtains annotation data of the first user.

In a first possible implementation manner of the fourth aspect, the obtaining module is specifically configured to receive, at an initial stage of the game, the location information of the first user and the behavior information of the first user that are input by the first user according to a prompt at the initial stage of the game, and obtain the sensor data at the initial stage of the game.

In a second possible implementation manner of the fourth aspect, the obtaining module includes:
a first obtaining unit, configured to obtain the sensor data at an initial stage of the game;
a sending unit, configured to send the sensor data to the server after the first obtaining unit obtains the sensor data;
a first receiving unit, configured to receive candidate user location information and candidate user behavior information that are returned by the server, where the candidate user location information and the candidate user behavior information are predicted by the server according to the sensor data;
a first displaying unit, configured to display the candidate user location information and the candidate user behavior information to the first user so that the first user makes a selection; and
a second receiving unit, configured to receive a selection instruction input by the first user, where the selection instruction includes location information of the first user and behavior information of the first user that are respectively selected by the first user from the candidate user location information and the candidate user behavior information.

In a third possible implementation manner of the fourth aspect, the obtaining module includes:
a second obtaining unit, configured to obtain the sensor data at an initial stage of the game;
a predicting unit, configured to predict candidate user location information and candidate user behavior information according to the sensor data;
a second displaying unit, configured to display the candidate user location information and the candidate user behavior information to the first user so that the first user makes a selection; and
a third receiving unit, configured to receive a selection instruction input by the first user, where the selection instruction includes location information of the first user and behavior information of the first user that are respectively selected by the first user from the candidate user location information and the candidate user behavior information.

With reference to the third possible implementation manner of the fourth aspect, in a fourth possible implementation manner of the fourth aspect, the predicting unit is specifically configured to obtain, according to the sensor data, sensor data for location prediction and sensor data for behavior prediction that correspond to the first user, and recognize, according to a pre-stored mapping relationship between semantic locations and behaviors and the sensor data, the sensor data for location prediction and the sensor data for behavior prediction to obtain the candidate user location information and the candidate user behavior information.

With the user data annotation method, the terminal device, and the server provided in the embodiments of the present invention, the terminal device obtains location information and behavior information of a user and sensor data of each sensor on the terminal device in a process of a game, and provides them to the server; and the server annotates the location information and the behavior information of the user and the sensor data to obtain annotation data of the user. In this manner of obtaining annotation data of the user in the process of the game of the user, plenty of richer annotation data can be obtained, which is conducive to the application of user behavior recognition.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a user data annotation method according to an embodiment of the present invention;
FIG. 2 is a flowchart of a user data annotation method according to another embodiment of the present invention;
FIG. 3 is a flowchart of a user data annotation method according to another embodiment of the present invention;
FIG. 4 is a flowchart of a user data annotation method according to another embodiment of the present invention;
FIG. 5 is a flowchart of a user data annotation method according to another embodiment of the present invention;
FIG. 6 is a flowchart of a user data annotation method according to another embodiment of the present invention;
FIG. 7 is a schematic structural diagram of a server according to an embodiment of the present invention;
FIG. 8 is a schematic structural diagram of a server according to another embodiment of the present invention;
FIG. 9 is a schematic structural diagram of a server according to another embodiment of the present invention;
FIG. 10 is a schematic structural diagram of a first terminal device according to an embodiment of the present invention;
FIG. 11 is a schematic structural diagram of a first terminal device according to another embodiment of the present invention; and
FIG. 12 is a schematic structural diagram of a first terminal device according to another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

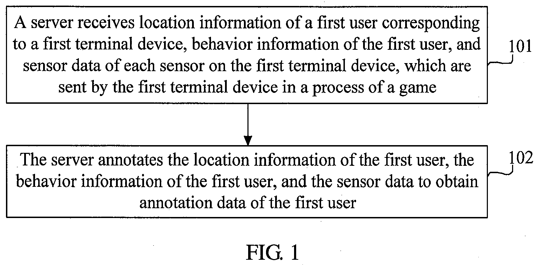

FIG. 1 is a flowchart of a user data annotation method according to an embodiment of the present invention. As shown in FIG. 1, the method in this embodiment includes:
Step 101: A server receives location information of a first user corresponding to a first terminal device, behavior information of the first user, and sensor data of each sensor on the first terminal device, which are sent by the first terminal device in a process of a game.

The server in this embodiment primarily refers to a server providing the game service, and is primarily responsible for cooperating with each terminal device to implement the game, and, in the process of the game, obtaining annotation data of the user who plays the game.

In this embodiment, as an initiator of the game, the first terminal device starts a game program on the first terminal device, and cooperates with the server so that the first user corresponding to the first terminal device starts the game. In the process of the game, the first terminal device obtains the location information of the first user, the behavior information of the first user, and the sensor data of each sensor on the first terminal device. The process in which the first terminal device obtains the location information of the first user, the behavior information of the first user, and the sensor data of the sensor is a step of the game, and is correlated with a specific process of the game. In this manner of using the location information, the behavior information and the like of the user as information required in the process of the game to engage the user into the game, the location information, the behavior information and the like of the user can be obtained without involving any privacy issue of the user.

In this embodiment, the location information of the first user refers to information representative of the current location of the user and understandable to the user. Such information complies with people's semantic understanding. For example, the first user may be in an office building, or in an office room of an office building, or in a lecture theater of a school or the like. The behavior information of the first user is information representative of an ongoing action of the first user and understandable to the user. Such information also complies with people's semantic understanding. For example, the first user is in a meeting or at a lecture or the like. Correspondingly, the sensors on the first terminal device may include, but is not limited to, a global positioning system (Global Positioning System, GPS for short), an accelerometer, an audio sensor, and an orientation sensor. Different sensors obtain different sensor data. For example, the sensor data of a GPS is generally coordinate information in a format of (latitude, longitude, height); the sensor data of an accelerometer is generally an acceleration value whose unit is the meter per second squared (m/s2); and the sensor data of an audio sensor is generally an audio signal of a specific frequency, and so on. The sensor data of such sensors generally does not comply with people's semantic understanding. In this embodiment, the sensor data of each sensor on the first terminal device may be in a mapping relationship with the location information of the first user or the behavior information of the first user. The server needs to find the mapping relationship between the sensor data and the location information of the first user or the behavior information of the first user, and annotate the mapping relationship between the location information of the first user or the behavior information of the first user and the sensor data, so as to obtain annotation data of the first user.

In an optional implementation manner, an implementation manner of step 101 includes: receiving, by the server, the location information of the first user, the behavior information of the first user, and the sensor data of each sensor on the first terminal device, which are sent by the first terminal device at an initial stage of the game. The initial stage of the game refers to the stage after the game is started but before the user really plays the game, and in the stage a prompt is set in the game to require the first user to input the location information and the behavior information of the first user according to the prompt, so that the required information is provided in the subsequent process of the game. Therefore, in this implementation manner, the location information of the first user and the behavior information of the first user are input by the first user into the first terminal device according to the prompt at the initial stage of the game. The first user may input the behavior information and location information of the first user into the first terminal device through an input device such as a keyboard, mouse, display, or display screen of the first terminal device. In this implementation manner, the first user inputs the location information and the behavior information of the first user into the first terminal device according to the prompt given at the initial stage of the game after the first terminal device starts the game. In the process, the first terminal device obtains sensor data of each sensor thereon, and then sends the location information of the first user and the behavior information of the first user, which are input by the first user, together with the obtained sensor data, to the server.

In another optional implementation manner, an implementation manner of step 101 includes: receiving, by the server, the sensor data of each sensor on the first terminal device, which is sent by the first terminal device at the initial stage of the game; predicting, by the server, candidate user location information and candidate user behavior information according to the sensor data; sending, by the server, the candidate user location information and the candidate user behavior information to the first terminal device so that the first user makes a selection; and receiving, by the server, the location information of the first user and the behavior information of the first user that are returned by the first terminal device, where the location information of the first user is selected by the first user from the candidate user location information through the first terminal device, and the location information of the first user is selected by the first user from the candidate user behavior information through the first terminal device.

Specifically, the first terminal device obtains the sensor data of each sensor on the first terminal device at the initial stage of the game after the game is started, and then sends the obtained sensor data of each sensor to the server. After receiving the sensor data, the server predicts the location information and the behavior information of the first user according to the sensor data to obtain candidate user location information and candidate user behavior information, and sends the obtained candidate user location information and candidate user behavior information to the first terminal device so that the first user makes a selection. For example, the server may predict the current location of the first user according to the GPS data, for example, may predict that the first user is currently in an office building, a residential area, a lecture theater of a school, and so on; the server may predict the current motion state of the first user according to data of an accelerometer, for example, may predict that the first user is in a stationary state or a motion state and the like; the server may predict the noise extent of surroundings of the first user according to data of an audio sensor, for example, may predict that the surroundings of the first user are quiet or noisy or the like; and then the server may predict the behavior of the first user according to the predicted location and motion state of the first user, and the predicted noise extent of surroundings and the like, for example, may predict that the first user is in a meeting or at a lecture or the like.

After receiving the candidate user location information and the candidate user behavior information, the first terminal device displays the candidate user location information and the candidate user behavior information to the first user so that the first user makes a selection. The first user may select, from the candidate user location information and the candidate user behavior information, what is closest to a current location and behavior of the user as the location information of the first user and the behavior information of the first user respectively, and send a selection instruction to the first terminal device, where the selection instruction includes the location information of the first user and the behavior information of the first user. The first user may send the selection instruction to the first terminal device by using a keypad or touchscreen on the first terminal device. After receiving the selection instruction of the first user, the first terminal device knows the location information of the first user and the behavior information of the first user, and then sends the location information of the first user and the behavior information of the first user to the server.

In the foregoing process, the server obtains sensor data for location prediction and sensor data for behavior prediction directly according to the sensor data of each sensor. Such data may not be directly understandable to the user. Therefore, it is necessary to recognize the sensor data for location prediction and the sensor data for behavior prediction, and convert the data into location information and behavior information understandable to the user. The sensor data for location prediction and the sensor data for behavior prediction may be recognized in many manners, and a relatively simple manner is pattern matching.

Taking the pattern matching as an example, the implementation process of the predicting, by the server, candidate user location information and candidate user behavior information according to the sensor data of each sensor includes: obtaining, by the server according to the sensor data of each sensor, sensor data for location prediction and sensor data for behavior prediction that correspond to the first user, and recognizing, according to a pre-stored mapping relationship between semantic locations and behaviors and the sensor data, the sensor data for location prediction and the sensor data for behavior prediction to obtain the candidate user location information and the candidate user behavior information. The server pre-stores the mapping relationship between semantic locations and behaviors and the sensor data. According to the mapping relationship, the sensor data for location prediction and the sensor data for behavior prediction can be converted into the candidate user location information and the candidate user behavior information that are understandable to the user. For example, the sensor data for location prediction may be GPS data or point of interest (Point of Interest, POI for short) data obtained by processing the GPS data. For example, the sensor data for location prediction, which is directly obtained by the server according to the sensor data, may be (latitude X, longitude Y, height H). Through the sensor data for location prediction, the user is unable to understand the location of the user intuitively. Therefore, by matching the sensor data for location prediction against the pre-stored mapping relationship between semantic locations and behaviors and the sensor data, the server finds location information corresponding to the sensor data for location prediction and understandable to the user. For example, the found location information is that the user is in an office building or a lecture theater of a school, which facilitates the selection of location information from multiple pieces of candidate user location information by the user. In another example, the sensor data for behavior prediction may be accelerometer data, and therefore, the sensor data for behavior prediction, which is directly obtained by the server according to the sensor data, may be a current acceleration value of the user, and the user is unable to understand the behavior of the user directly through the acceleration value. Therefore, by matching the acceleration value against the pre-stored mapping relationship between semantic locations and behaviors and the sensor data, the server finds behavior information corresponding to the sensor data for behavior prediction and understandable to the user. For example, the found behavior information is that the user is in a stationary state or a slow motion state or an accelerated motion state, which facilitates the determination of the current behavior of the user among multiple pieces of candidate user behavior information by the user. In another example, the sensor data for behavior prediction may be accelerometer data and/or audio sensor data, and therefore, the sensor data for behavior prediction, which is directly obtained by the server according to the sensor data, may be a current acceleration value of the user and an environment noise value in decibels, and the user is unable to understand the behavior of the user directly through the acceleration value and the environment noise value in decibels. Therefore, by matching the acceleration value and the environment noise value in decibels against the pre-stored mapping relationship between semantic locations and behaviors and the sensor data, the server finds behavior information corresponding to the sensor data for behavior prediction and understandable to the user. For example, the found behavior information is that the user is attending a lecture in a classroom or a meeting in a meeting room or the like.

Step 102: The server annotates the location information of the first user, the behavior information of the first user, and the sensor data to obtain annotation data of the first user.

After obtaining the location information of the first user, the behavior information of the first user, and the sensor data, the server annotates the data to obtain annotation data of the first user. The annotation data of the first user includes the location information of the first user, the behavior information of the first user, the sensor data corresponding to the location information of the first user, and the sensor data corresponding to the behavior information of the first user. Optionally, the server may determine a mapping relationship between the currently received sensor data and the location information and the behavior information of the first user according to the sensor data in a period (such as 1 minute).

For example, the server records the annotation data of the first user in a manner shown in Table 1, mainly including: an identifier of the first user, time, sensor data, and annotation data, where the identifier of the first user may be an identifier of the first terminal device.

**Table 1**

| Identifier (ID) | T ime | Sensor Data of Each Sensor | Annotation Data |
|---|---|---|---|
| ID of the first user | T ime 1 | GPS (latitude, longitude, height) | Office (location) |
| ID of the first user | T ime 1 | Accelerometer (x, y, z) | Attending a meeting (behavior) |
| ID of the first user | T ime 2 | GPS (latitude, longitude, height) | Park (location) |
| ID of the first user | T ime 2 | Accelerometer (x, y, z) | Running (behavior) |

With the user data annotation method provided in this embodiment, the terminal device obtains location information and behavior information of a user and sensor data of each sensor on the terminal device in a process of a game, and provides them to the server; and the server annotates the location information and the behavior information of the user and the sensor data to obtain annotation data of the user. In this manner of obtaining annotation data of the user in the process of the game of the user, plenty of richer annotation data can be obtained, which is conducive to the application of user behavior recognition.

On the basis of the foregoing implementation manners, after step 101, the method further includes: cooperating, by the first terminal device, with the server to perform other operations in the game by using the location information of the first user and the behavior information of the first user.

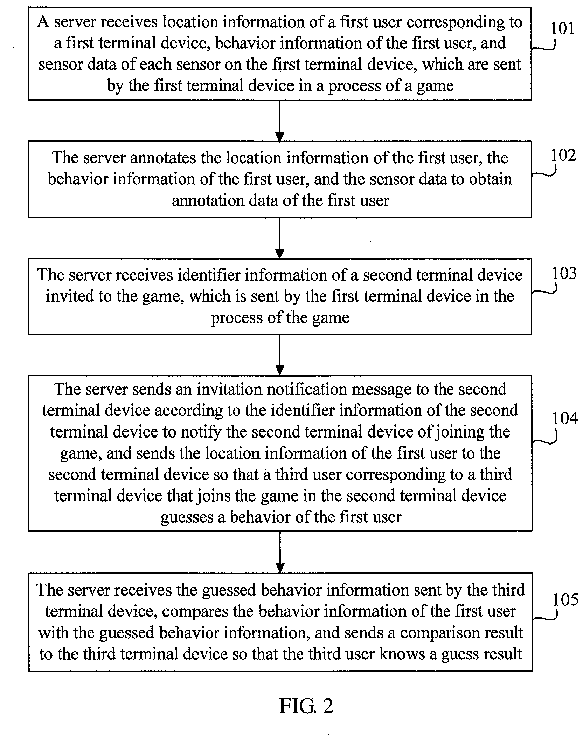

For example, the game started by the first terminal device is a puzzle game like "Guess Who". Such a game requires participation of other users for implementation. Therefore, as shown in FIG. 2, after step 101, the user data annotation method in this embodiment further includes:
Step 103: The server receives identifier information of a second terminal device invited to the game, which is sent by the first terminal device in the process of the game.

The second terminal device invited to the game represents a second user invited to the game, and the second user performs the game through the second terminal device. The second terminal device herein may be one or more devices. The second user invited to the game may be a player registered for the game (that is, a user in the system), and correspondingly, the second terminal device is a terminal device used by the user in the system, and the identifier information of the second terminal device may be a game account number used by the second terminal device. Alternatively, the second user may be another user rather than a player of the game (a user outside the system), and correspondingly, the second terminal is a terminal device used by the user outside the system, such as a contact person in an address book of the first terminal device, and the identifier information of the second terminal device may be a mobile phone number of the second terminal device; in another example, the second user may be a contact person in a buddy list in an email box used by the first terminal device, and correspondingly, the identifier information of the second terminal device may be an email address used by the second terminal device, and so on. If a user is registered as a player of the game, the user is a user in the system; otherwise, the user is a user outside the system.

Optionally, after sending the location information of the first user, the behavior information of the first user, and the sensor data of each sensor to the server, the first terminal device may prompt the first user to select a second user who will be invited to the game, and receive an invitation instruction input by the first user, where the invitation instruction includes identifier information of the second terminal device selected by the first user. After knowing the identifier information of the second terminal device invited to the game, the first terminal device sends the identifier information of the second terminal device to the server.

Step 104: The server sends an invitation notification message to the second terminal device according to the identifier information of the second terminal device to notify the second terminal device of joining the game, and sends the location information of the first user to the second terminal device so that a third user corresponding to a third terminal device guesses a behavior of the first user, wherein the third terminal device is one terminal device of the at least one second terminal device, which joins the game.

After receiving the identifier information of the second terminal device from the first terminal device, the server sends an invitation notification message to the second terminal device, so as to notify the second terminal device of joining the game. Depending on the identifier information of the second terminal device, the manner in which the server sends the invitation notification message to the second terminal device differs. For example, if the identifier information of the second terminal device is a mobile phone number, the server may send the invitation notification message by means of a short message to the second terminal device; if the identifier information of the second terminal device is an email address, the server may send the invitation notification message by means of an email to the second terminal device; and, if the identifier information of the second terminal device is a game account number, the server may send the invitation notification message by means of a system message to the second terminal device.

After receiving the invitation notification message sent by the server, the second terminal device may choose to join the game or refuse to join the game.

While sending the invitation notification message to the second terminal device, the server sends location information of the first user as prompt information to the second terminal device so that a third user corresponding to a third terminal device guesses the behavior of the first user, wherein the third terminal device is one terminal device of the at least one second terminal device, which chooses to join the game. The third user is a user who really participates in the game. The third user may input guessed behavior information of the first user through the third terminal device, and the third terminal device sends the guessed behavior information to the server.

If choosing to join the game, the third user may give the guessed behavior information according to the location information of the first user provided by the server, the current time, and particulars of the first user (for example, the first user generally likes to take part in what activities at what time).

Step 105: The server receives the guessed behavior information sent by the third terminal device, compares the behavior information of the first user with the guessed behavior information, and sends a comparison result to the third terminal device so that the third user knows a guess result.

After receiving the guessed behavior information sent by the third terminal device, the server compares the behavior information of the first user with the guessed behavior information to judge whether the third user guesses correctly, and sends a comparison result to the third terminal device so that the third user knows the guess result.

Further, the server may make statistics of invitation state information and guess state information that correspond to the first terminal device. The invitation state information includes: how many times each user has been invited, how many times the invitation is responded to, how many times the invitation is rejected, and so on. The guess state information may include: how many times each participating user has guessed correctly, guess correctness probability in a period, and so on.

It should be noted that the order between steps 103 to 105 and step 102 is not limited, and the two operations can be performed concurrently.

In this embodiment, while the user participates in a game, the user asks other users in a manner like greeting to guess what the user is doing. In this way, the user can make new friends while maintaining friendships. The user may also start a game actively and indicate a willingness of sharing location information and behavior information of the user, without involving issues of user privacy or fraudulent annotation data. The server obtains the location information and the behavior information of the user while providing a game service for the user, and thereby obtains annotation data of the user. In this manner of obtaining annotation data of the user in the process of the game of the user, plenty of richer annotation data can be obtained, which is conducive to the application of user behavior recognition.

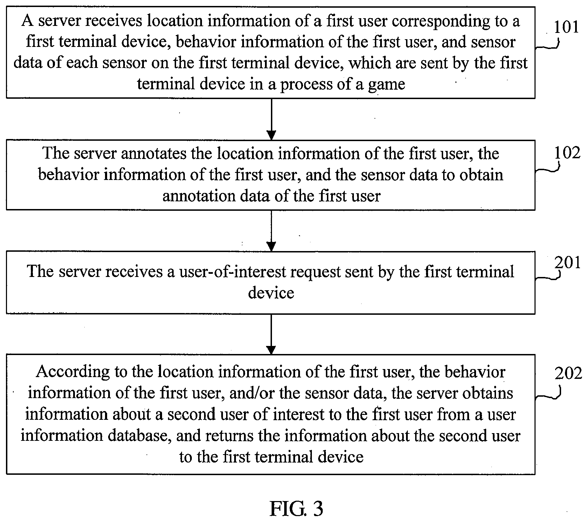

In another example, the game started by the first terminal device is a game like "People Possibly of Interest to You", and, as shown in FIG. 3, after step 101, the user data annotation method in this embodiment includes:
Step 201: The server receives a user-of-interest request sent by the first terminal device.
Step 202: According to the location information of the first user, the behavior information of the first user, and/or the sensor data, the server obtains information about a second user of interest to the first user from a user information database, and returns the information about the second user to the first terminal device.

The user information database is used to store location information and behavior information of all users who are playing the game while the first user is playing the game, and corresponding sensor data.

Specifically, after sending the location information of the first user, the behavior information of the first user, and the sensor data to the server, the first terminal device goes on to send a user-of-interest request to the server, so that the server returns information about the second user possibly of interest to the first user according to the user-of-interest request. A user information database is set on the server to store the location information and the behavior information of all users who are playing the game, and the corresponding sensor data. In this way, after receiving the user-of-interest request sent by the first terminal device, the server may compare the location information of the first user, the behavior information of the first user, and/or the sensor data that are previously received with the location information and the behavior information of other users than the first user and the corresponding sensor data in the user information database respectively to obtain the information about the second user possibly of interest to the first user. Whether the server uses one or more of the location information, the behavior information, and the sensor data to obtain the user of interest may be preset.

For example, the server may use only the sensor data to find the second user (that is, a user located in the same location as the first user) who has the same sensor data as the first user, and use the second user as a user of interest to the first user. In another example, the server may use both the sensor data and the behavior information to find the second user (that is, a user having the same behavior in the same location) who has the same sensor data and the same behavior as the first user, and use the second user as a user of interest to the first user. In another example, the server may use both the sensor data and the behavior information to find a user who is a certain distance away from the first user (for example, the Euclidean distance between two terminal devices falls within a threshold) and who has the same behavior, and use the found user as the second user. The sensor data used for calculating the user location herein primarily refers to GPS data. Moreover, if no user has the same location information or the behavior information as the other user, a similarity may be determined, and the user that meets a similarity requirement may be used as the second user. In the process of the game, the first user can find like-minded people to take part in an activity together.

In this embodiment, the user can find like-minded people by taking part in a game, which is helpful for the user to make new friends. The user may also start a game actively and indicate a willingness of sharing location information and behavior information of the user, without involving issues of user privacy or fraudulent annotation data. The server obtains the location information and the behavior information of the user while providing a game service for the user, and thereby obtains annotation data of the user. In this manner of obtaining annotation data of the user in the process of the game of the user, plenty of richer annotation data can be obtained, which is conducive to the application of user behavior recognition.

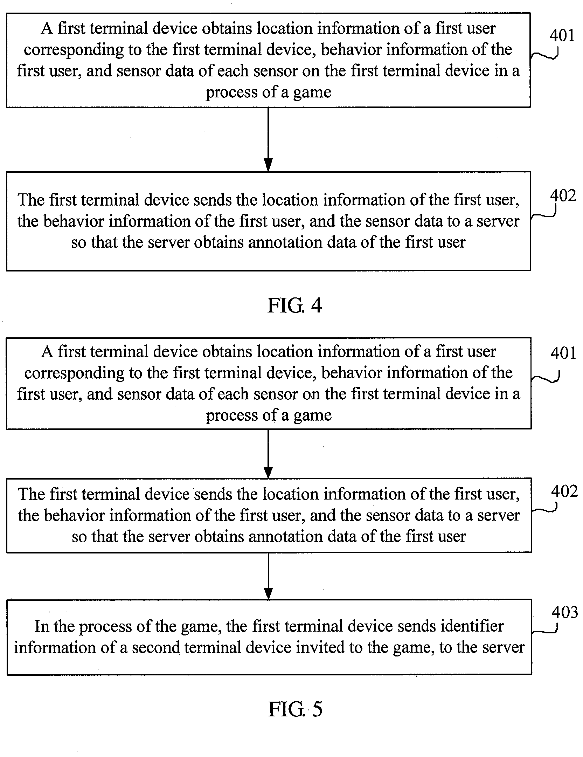

FIG. 4 is a flowchart of a user data annotation method according to another embodiment of the present invention. As shown in FIG. 4, the method in this embodiment includes:
Step 401: A first terminal device obtains location information of a first user corresponding to the first terminal device, behavior information of the first user, and sensor data of each sensor on the first terminal device in a process of a game.
Step 402: The first terminal device sends the location information of the first user, the behavior information of the first user, and the sensor data to a server so that the server obtains annotation data of the first user.

The server in this embodiment primarily refers to a server providing the game service, and is primarily responsible for cooperating with each terminal device to implement the game, and, in the process of the game, obtaining annotation data of the user who plays the game.

In this embodiment, as an initiator of the game, the first terminal device starts a game program on the first terminal device, and cooperates with the server so that the first user corresponding to the first terminal device starts the game. In the process of the game, the first terminal device obtains the location information of the first user, the behavior information of the first user, and the sensor data of each sensor on the first terminal device. The process in which the first terminal device obtains the location information of the first user, the behavior information of the first user, and the sensor data of the sensor is a step of the game, and is correlated with a specific process of the game. In this manner of using the location information, the behavior information and the like of the user as information required in the process of the game to engage the user into the game, the location information, the behavior information and the like of the user can be obtained without involving any privacy issue of the user.

In this embodiment, the location information of the first user refers to a current location of the first user. For example, the first user may be in an office building, or in an office room of an office building, or in a lecture theater of a school or the like. The behavior information of the first user refers to an ongoing action of the first user. For example, the first user is in a meeting or at a lecture or the like. Correspondingly, the sensors on the first terminal device may include, but is not limited to, a GPS, an accelerometer, an audio sensor, and an orientation sensor.

In an optional implementation manner, an implementation manner of step 401 includes receiving, by the first terminal device at an initial stage of the game, the location information of the first user and the behavior information of the first user that are input by the first user according to a prompt at the initial stage of the game; and obtaining, by the first terminal device, the sensor data of each sensor thereon at the initial stage of the game. No limitation is imposed on the implementation order between the operation of receiving the location information of the first user and the behavior information of the first user by the first terminal device and the operation of obtaining the sensor data of each sensor thereon by the first terminal device. Preferably, the first terminal device may obtain the sensor data of each sensor thereon periodically, and send the sensor data to the server.

The detailed process of this implementation manner is not further described herein. For details, reference may be made to the description of the corresponding optional implementation manner in step 101.

In another optional implementation manner, an implementation manner of step 401 includes: obtaining, by the first terminal device, the sensor data of each sensor thereon at the initial stage of the game, and sending the obtained sensor data to the server; receiving, by the first terminal device, candidate user location information and candidate user behavior information that are returned by the server, where the candidate user location information and the candidate user behavior information are predicted by the server according to the sensor data sent by the first terminal device; displaying, by the first terminal device, the candidate user location information and the candidate user behavior information to the first user so that the first user makes a selection; and receiving, by the first terminal device, a selection instruction input by the first user, where the selection instruction includes location information of the first user and behavior information of the first user that are selected by the first user from the candidate user location information and the candidate user behavior information.

The detailed process of this implementation manner is not further described herein. For details, reference may be made to the description of the corresponding optional implementation manner in step 101.

In another optional implementation manner, an implementation manner of step 401 includes: obtaining, by the first terminal device, the sensor data of each sensor thereon at the initial stage of the game; predicting, by the first terminal device, candidate user location information and candidate user behavior information according to the obtained sensor data; displaying, by the first terminal device, the candidate user location information and the candidate user behavior information to the first user so that the first user makes a selection; and receiving, by the first terminal device, a selection instruction input by the first user, where the selection instruction includes location information of the first user and behavior information of the first user that are respectively selected by the first user from the candidate user location information and the candidate user behavior information.

In this implementation manner, the first terminal device may predict the current location of the first user according to the GPS data, for example, may predict that the first user is currently in an office building, a residential area, a lecture theater of a school, and so on; the first terminal device may predict the current motion state of the first user according to data of an accelerometer, for example, may predict that the first user is in a stationary state or a motion state and the like; the first terminal device may predict the noise extent of surroundings of the first user according to data of an audio sensor, for example, may predict that the surroundings of the first user are quiet or noisy or the like; and then the first terminal device may predict the behavior of the first user according to the predicted location and motion state of the first user, and the predicted noise extent of surroundings and the like, for example, may predict that the first user is in a meeting or at a lecture or the like. By predicting the obtained sensor data, the first terminal device can obtain the candidate user location information and the candidate user behavior information, and then display the candidate user location information and the candidate user behavior information to the first user so that the first user makes a selection. The first user may select, from the candidate user location information and the candidate user behavior information, what is closest to a current location and behavior of the user as the location information of the first user and the behavior information of the first user respectively, and send a selection instruction to the first terminal device, where the selection instruction includes the location information of the first user and the behavior information of the first user. The first user may send the selection instruction to the first terminal device by using a keypad or touchscreen on the first terminal device. Upon receiving the selection instruction of the first user, the first terminal device obtains the location information of the first user and the behavior information of the first user.

In the foregoing process, the first terminal device obtains sensor data for location prediction and sensor data for behavior prediction directly according to the sensor data of each sensor. Such information may not be directly understandable to the user. Therefore, it is necessary to recognize the sensor data for location prediction and the sensor data for behavior prediction that are directly obtained according to the sensor data, and convert the data into location information and behavior information understandable to the user. The sensor data for location prediction and the sensor data for behavior prediction may be recognized in many manners, and a relatively simple manner is pattern matching.

Taking the pattern matching as an example, the implementation process of the predicting, by the first terminal device, candidate user location information and candidate user behavior information according to the obtained sensor data includes: obtaining, by the first terminal device according to the obtained sensor data, sensor data for location prediction and sensor data for behavior prediction that correspond to the first user; and recognizing, by the first terminal device according to a pre-stored mapping relationship between semantic locations and behaviors and the sensor data, the sensor data for location prediction and the sensor data for behavior prediction to obtain the candidate user location information and the candidate user behavior information. The first terminal device pre-stores the mapping relationship between semantic locations and behaviors and the sensor data. According to the mapping relationship, the sensor data for location prediction and the sensor data for behavior prediction can be converted into the candidate user location information and the candidate user behavior information that are understandable to the user. For example, the sensor data for location prediction may be GPS data or POI data obtained by processing the GPS data. Therefore, the sensor data for location prediction, which is directly obtained by the first terminal device according to the GPS data, is (latitude X, longitude Y, height H). Through the sensor data for location prediction, the user is unable to understand the location of the user intuitively. Therefore, by querying the pre-stored mapping relationship between semantic locations and behaviors and the sensor data, the first terminal device obtains location information corresponding to the sensor data for location prediction and understandable to the user. For example, the found location information is that the user is in an office building or a lecture theater of a school, which facilitates the selection of location information from multiple pieces of candidate user location information by the user. In another example, the sensor data for behavior prediction may be accelerometer data, or may be accelerometer data and audio sensor data, or may be a combination of accelerometer data, audio sensor data, orientation sensor data, and GPS data. For example, the sensor data for behavior prediction is accelerometer data, the sensor data for behavior prediction, which is directly obtained by the first terminal device according to the accelerometer data, is a current acceleration value of the user. Through the acceleration value, the user is unable to understand the behavior of the user directly. Therefore, by querying the pre-stored mapping relationship between semantic locations and behaviors and the sensor data, the first terminal device obtains behavior information corresponding to the acceleration value and understandable to the user. For example, the found behavior information is that the user is in a stationary state or a slow motion state or an accelerated motion state, which facilitates the determination of the current behavior of the user among multiple pieces of candidate user behavior information by the user.

It should be noted that the mapping relationship between semantic locations and behaviors and the sensor data may be updated periodically on the first terminal device. For example, the first terminal device may download the mapping relationship between semantic locations and behaviors and the sensor data from the server periodically. In this way, the first terminal device may store the mapping relationship between semantic locations and behaviors and the sensor data within only a period, which takes the performance limit of the first terminal device into full account and is favorable for the implementation of the first terminal device.

In an optional implementation manner, based on all implementation manners described above, as shown in FIG. 5, after step 402, the method in this embodiment further includes:
Step 403: In the process of the game, the first terminal device sends identifier information of a second terminal device invited to the game, to the server.

In this implementation manner, the game may be a game such as "Guess Who", which requires participation of other users.

The process of the game in step 403 and after step 403 is not further described herein. For details, reference may be made to the description of the embodiment shown in FIG. 2.

In this embodiment, while the user participates in a game, the user asks other users in a manner like greeting to guess what the user is doing. In this way, the user can make new friends while maintaining friendships. The user may also start a game actively and indicate a willingness of sharing location information and behavior information of the user, without involving issues of user privacy or fraudulent annotation data. The server obtains the location information and the behavior information of the user while providing a game service for the user, and thereby obtains annotation data of the user. In this manner of obtaining annotation data of the user in the process of the game of the user, plenty of richer annotation data can be obtained, which is conducive to the application of user behavior recognition.

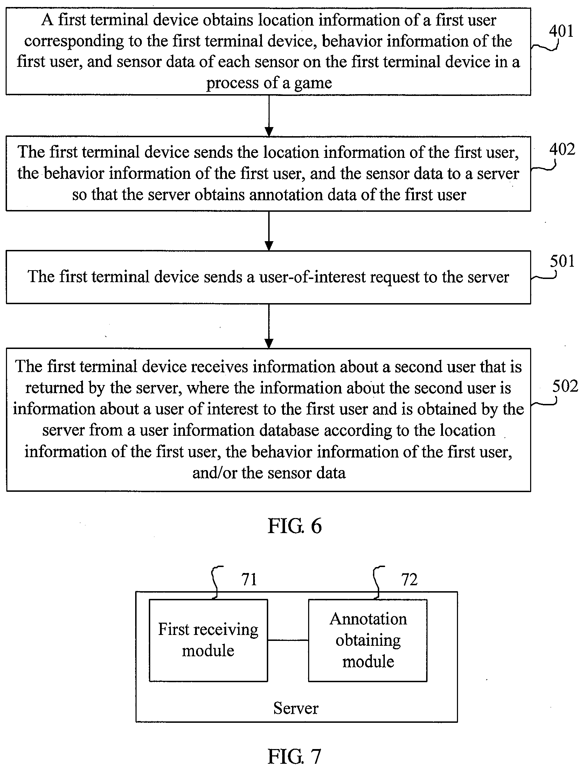

In another optional implementation manner, based on all implementation manners described above, as shown in FIG. 6, after step 402, the method in this embodiment further includes:
Step 501: The first terminal device sends a user-of-interest request to the server.
Step 502: The first terminal device receives information about a second user that is returned by the server, where the information about the second user is information about a user of interest to the first user and is obtained by the server from a user information database according to the location information of the first user, the behavior information of the first user, and/or the sensor data.

The user information database is used to store location information and behavior information of all users who are playing the game while the first user is playing the game, and corresponding sensor data.

In this implementation manner, the game may be a game such as "People Possibly of Interest to You", which requires no participation of other users.

Step 501 and step 502 are not further described herein. For details, reference may be made to the description of the embodiment shown in FIG. 3.

In this embodiment, the user can find like-minded people by taking part in a game, which is helpful for the user to make new friends. The user may also start a game actively and indicate a willingness of sharing location information and behavior information of the user, without involving issues of user privacy or fraudulent annotation data. The server obtains the location information and the behavior information of the user while providing a game service for the user, and thereby obtains annotation data of the user. In this manner of obtaining annotation data of the user in the process of the game of the user, plenty of richer annotation data can be obtained, which is conducive to the application of user behavior recognition.

FIG. 7 is a schematic structural diagram of a server according to an embodiment of the present invention. As shown in FIG. 7, the server in this embodiment includes: a first receiving module 71 and an annotation obtaining module 72.

The first receiving module 71 is configured to receive location information of a first user corresponding to a first terminal device, behavior information of the first user, and sensor data of each sensor on the first terminal device, which are sent by the first terminal device in a process of a game.

The annotation obtaining module 72 is connected to the first receiving module 71, and is configured to annotate the location information of the first user, the behavior information of the first user, and the sensor data that are received by the first receiving module 71, so as to obtain annotation data of the first user.

In an optional implementation manner, the first receiving module 71 may be specifically configured to receive the location information of the first user, the behavior information of the first user, and the sensor data of each sensor on the first terminal device, which are sent by the first terminal device at an initial stage of the game, where the location information of the first user and the behavior information of the first user are input by the first user into the first terminal device according to a prompt at the initial stage of the game.

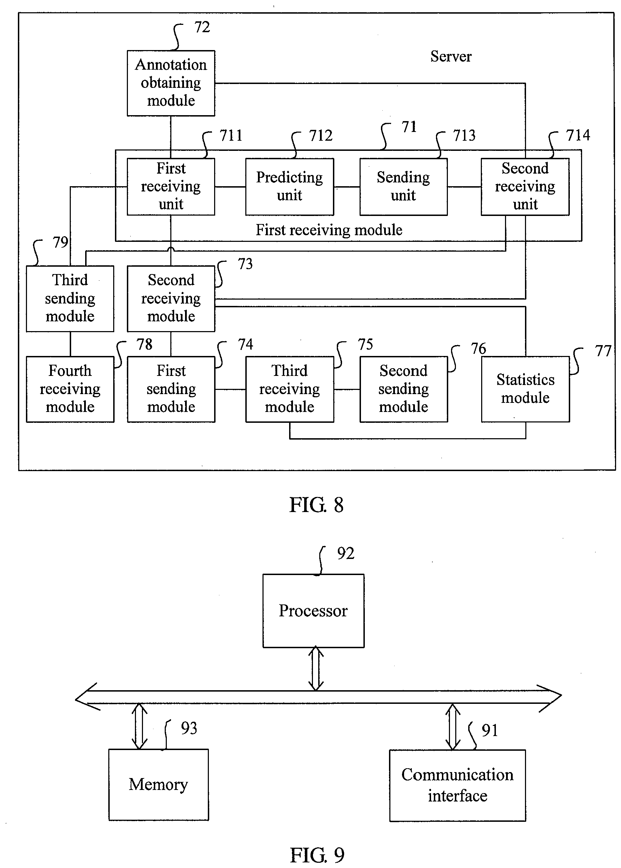

In an optional implementation manner, as shown in FIG. 8, a structure of the first receiving module 71 includes: a first receiving unit 711, a predicting unit 712, a sending unit 713, and a second receiving unit 714.

The first receiving unit 711 is configured to receive the sensor data of each sensor on the first terminal device, which is sent by the first terminal device at an initial stage of the game. The first receiving unit 711 is connected to the annotation obtaining module 72, and is configured to provide the received sensor data to the annotation obtaining module 72.

The predicting unit 712 is connected to the first receiving unit 711, and is configured to predict candidate user location information and candidate user behavior information according to the sensor data after the first receiving unit 711 receives the sensor data.

The sending unit 713 is connected to the predicting unit 712, and is configured to send the candidate user location information and the candidate user behavior information, which are predicted by the predicting unit 712, to the first terminal device so that the first user makes a selection.

The second receiving unit 714 is configured to receive the location information of the first user and the behavior information of the first user that are returned by the first terminal device, where the location information of the first user is selected by the first user from the candidate user location information through the first terminal device, and the location information of the first user is selected by the first user from the candidate user behavior information through the first terminal device. Specifically, the second receiving unit 714 is connected to the annotation obtaining module 72, and is configured to provide the location information of the first user and the behavior information of the first user to the annotation obtaining module 72. Optionally, the second receiving unit 714 is connected to the sending unit 713, and is configured to: after the sending unit 713 sends the candidate user location information and the candidate user behavior information, receive the location information of the first user and the behavior information of the first user that are returned by the first terminal device.

The predicting unit 712 may be specifically configured to obtain, according to the sensor data received by the first receiving unit 711, sensor data for location prediction and sensor data for behavior prediction that correspond to the first user, and recognize, according to a pre-stored mapping relationship between semantic locations and behaviors and the sensor data, the sensor data for location prediction and the sensor data for behavior prediction to obtain the candidate user location information and the candidate user behavior information.

In an optional implementation manner, as shown in FIG. 8, the server in this embodiment further includes: a second receiving module 73, a first sending module 74, a third receiving module 75, and a second sending module 76.

The second receiving module 73 is configured to: after the first receiving module 71 receives the location information of the first user, the behavior information of the first user, and the sensor data, receive identifier information of a second terminal device invited to the game, which is sent by the first terminal device in the process of the game. The second receiving module 73 is connected to the first receiving module 71, and more specifically, may be connected to the first receiving unit 711 and the second receiving unit 714.

The first sending module 74 is connected to the second receiving module 73, and is configured to: send an invitation notification message to the second terminal device according to the identifier information of the second terminal device that is received by the second receiving module 73, so as to notify the second terminal device of joining the game; and send the location information of the first user to the second terminal device so that a third user corresponding to a third terminal device guesses a behavior of the first user, wherein the third terminal device is one terminal device of the at least one second terminal device, which joins the game.

The third receiving module 75 is configured to receive guessed behavior information sent by the third terminal device, and compare the behavior information of the first user with the guessed behavior information. Optionally, the third receiving module 75 is connected to the first sending module 74, and is configured to receive the guessed behavior information after the first sending module 74 sends the invitation notification message and the location information of the first user.

The second sending module 76 is connected to the third receiving module 75, and is configured to send a comparison result of the third receiving module 75 to the third terminal device so that the third user knows a guess result.

In an optional implementation manner, as shown in FIG. 8, the server in this embodiment further includes a statistics module 77. The statistics module 77 is configured to make statistics of invitation state information and guess state information that correspond to the first terminal device. Optionally, the statistics module 77 is connected to the second receiving module 73 and the third receiving module 75, and is configured to make statistics according to the identifier information of the second terminal device that is received by the second receiving module 73, and according to the guessed behavior information returned by the third terminal device and received by the third receiving module 75.

Optionally, the identifier information of the second terminal device may be a mobile phone number of the second terminal device, an email address corresponding to the second terminal device, or an account number of the second terminal device in the game.

In an optional implementation manner, as shown in FIG. 8, the server in this embodiment further includes a fourth receiving module 78 and a third sending module 79.

The fourth receiving module 78 is configured to receive a user-of-interest request from the first terminal device after the first receiving module receives the location information of the first user, the behavior information of the first user, and the sensor data.

The third sending module 79 is connected to the fourth receiving module 78 and the first receiving module 71, and is configured to: according to the location information of the first user, the behavior information of the first user, and/or the sensor data that are received by the first receiving module 71, obtain information about a second user of interest to the first user from a user information database, and return the information about the second user to the first terminal device, where the user information database is used to store location information and behavior information of all users who are playing the game while the first user is playing the game, and corresponding sensor data.

The functional modules or units of the server in this embodiment may be used to implement the corresponding processes in the embodiments shown in FIG. 1 to FIG. 3. The detailed working principles thereof are not further described herein. For details, reference may be made to the description in the method embodiments.

The server provided in this embodiment receives location information and behavior information of a user and sensor data of each sensor on a terminal device, which are obtained by the terminal device in a process of a game of the user, and then annotates the location information and the behavior information of the user and the sensor data to obtain annotation data of the user. In this manner of obtaining annotation data of the user in the process of the game of the user, plenty of richer annotation data can be obtained, which is conducive to the application of user behavior recognition.

FIG. 9 is a schematic structural diagram of a server according to another embodiment of the present invention. As shown in FIG. 9, the server in this embodiment includes: a communication interface 91, a processor 92, a memory 93, and a bus. The communication interface 91, the processor 92, and the memory 93 are interconnected through the bus to communicate with each other. The bus may be an industry standard architecture (Industry Standard Architecture, ISA for short) bus, a peripheral component interconnect (Peripheral Component Interconnect, PCI) bus, or an extended industry standard architecture (Extended Industry Standard Architecture, EISA for short) bus, and so on. The bus may be categorized into an address bus, a data bus, a control bus, and so on. For ease of illustration, the bus is represented by only one bold line in FIG. 9, which, however, does not mean that there is only one bus or only one type of bus.

The communication interface 91 is configured to receive location information of a first user corresponding to a first terminal device, behavior information of the first user, and sensor data of each sensor on the first terminal device, which are sent by the first terminal device in a process of a game.

The memory 93 is configured to store a program. Specifically, the program may include a program code, where the program code includes a computer operation instruction. The memory 93 may include a high-speed RAM or a non-volatile memory (non-volatile memory), for example, at least one disk storage.

The processor 92 is configured to execute the programs to annotate the location information of the first user, the behavior information of the first user, and the sensor data, which are received by the communication interface 91, so as to obtain annotation data of the first user.

The processor 92 may be a central processing unit (CPU), or an application specific integrated circuit (Application Specific Integrated Circuit, ASIC for short), or one or more integrated circuits configured to implement the embodiment of the present invention.

It should be noted that the communication interface 91 in this embodiment not only receives all types of information or data sent by the first terminal device, but also may send other information or data to the first terminal device; the memory 93 in this embodiment not only stores programs, but also stores all types of information or data received by the communication interface 91.

The server provided in this embodiment may be used to implement the corresponding processes in the embodiments shown in FIG. 1 to FIG. 3. The detailed working principles thereof are not further described herein. For details, reference may be made to the description in the method embodiments.

The server provided in this embodiment receives location information and behavior information of a user and sensor data of each sensor on a terminal device, which are obtained by the terminal device in a process of a game of the user, and then annotates the location information and the behavior information of the user and the sensor data to obtain annotation data of the user. In this manner of obtaining annotation data of the user in the process of the game of the user, plenty of richer annotation data can be obtained, which is conducive to the application of user behavior recognition.

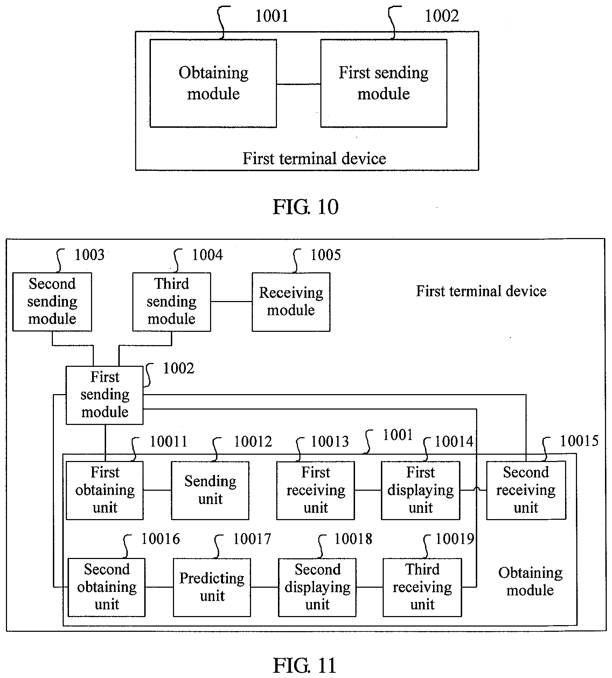

FIG. 10 is a schematic structural diagram of a first terminal device according to an embodiment of the present invention. As shown in FIG. 10, the first terminal device in this embodiment includes: an obtaining module 1001 and a first sending module 1002.

The obtaining module 1001 is configured to obtain location information of a first user corresponding to the first terminal device, behavior information of the first user, and sensor data of each sensor on the first terminal device in a process of a game.

The first sending module 1002 is connected to the obtaining module 1001, and is configured to send the location information of the first user, the behavior information of the first user, and the sensor data, which are obtained by the obtaining module 1001, to a server so that the server obtains annotation data of the first user.

In an optional implementation manner, the obtaining module 1001 may be specifically configured to receive, at an initial stage of the game, the location information of the first user and the behavior information of the first user that are input by the first user according to a prompt at the initial stage of the game, and obtain the sensor data of each sensor on the first terminal device at the initial stage of the game.

In an optional implementation manner, as shown in FIG. 11, a structure of the obtaining module 1001 includes: a first obtaining unit 10011, a sending unit 10012, a first receiving unit 10013, a first displaying unit 10014, and a second receiving unit 10015.

The first obtaining unit 10011 is configured to obtain the sensor data of each sensor on the first terminal device at the initial stage of the game. The first obtaining unit 10011 is connected to the first sending module 1002, and is configured to provide the sensor data to the first sending module 1002.

The sending unit 10012 is connected to the first obtaining unit 10011, and is configured to send the sensor data to the server after the first obtaining unit 10011 obtains the sensor data.

The first receiving unit 10013 is configured to receive candidate user location information and candidate user behavior information that are returned by the server, where the candidate user location information and the candidate user behavior information are predicted by the server according to the sensor data sent by the sending unit 10012.

The first displaying unit 10014 is connected to the first receiving unit 10013, and is configured to display the candidate user location information and the candidate user behavior information, which are received by the first receiving unit 10013, to the first user so that the first user makes a selection.

The second receiving unit 10015 is configured to receive a selection instruction input by the first user, where the selection instruction includes location information of the first user and behavior information of the first user that are respectively selected by the first user from the candidate user location information and the candidate user behavior information. Optionally, the second receiving unit 10015 is connected to the first displaying unit 10014. The second receiving unit 10015 is connected to the first sending module 1002, and is configured to provide the location information of the first user and the behavior information of the first user to the first sending module 1002.

In an optional implementation manner, as shown in FIG. 11, another structure of the obtaining module 1001 includes: a second obtaining unit 10016, a predicting unit 10017, a second displaying unit 10018, and a third receiving unit 10019.

The second obtaining unit 10016 is configured to obtain the sensor data of each sensor on the first terminal device at the initial stage of the game. The second obtaining unit 10016 is connected to the first sending module 1002, and is configured to provide the sensor data to the first sending module 1002.

The predicting unit 10017 is connected to the second obtaining unit 10016, and is configured to predict candidate user location information and candidate user behavior information according to the sensor data obtained by the second obtaining unit 10016.

The second displaying unit 10018 is connected to the predicting unit 10017, and is configured to display the candidate user location information and the candidate user behavior information, which are predicted by the predicting unit 10017, to the first user so that the first user makes a selection.

The third receiving unit 10019 is configured to receive a selection instruction input by the first user, where the selection instruction includes location information of the first user and behavior information of the first user that are respectively selected by the first user from the candidate user location information and the candidate user behavior information. Optionally, the third receiving unit 10019 is connected to the second displaying unit 10018. The third receiving unit 10019 is connected to the first sending module 1002, and is configured to provide the location information of the first user and the behavior information of the first user to the first sending module 1002.

Optionally, the predicting unit 10017 may be specifically configured to obtain, according to the sensor data obtained by the second obtaining unit 10016, sensor data for location prediction and sensor data for behavior prediction that correspond to the first user, and recognize, according to a pre-stored mapping relationship between semantic locations and behaviors and the sensor data, the sensor data for location prediction and the sensor data for behavior prediction to obtain the candidate user location information and the candidate user behavior information.

In an optional implementation manner, as shown in FIG. 11, the first terminal device in this embodiment further includes a second sending module 1003. The second sending module 1003 is connected to the first sending module 1002, and is configured to send identifier information of a second terminal device invited to the game, to the server in the process of the game after the first sending module 1002 sends the location information of the first user, the behavior information of the first user, and the sensor data.

Optionally, the second sending module 1003 may be specifically configured to: receive an invitation instruction input by the first user, where the invitation instruction includes the identifier information of the second terminal device; and then send the identifier information of the second terminal device to the server.

In an optional implementation manner, as shown in FIG. 11, the first terminal device in this embodiment further includes a third sending module 1004 and a receiving module 1005.

The third sending module 1004 is connected to the first sending module 1002, and is configured to send a user-of-interest request to the server after the first sending module 1002 sends the location information of the first user, the behavior information of the first user, and the sensor data.

The receiving module 1005 is configured to receive information about a second user that is returned by the server, where the information about the second user is information about a user of interest to the first user and is obtained by the server from a user information database according to the location information of the first user, the behavior information of the first user, and/or the sensor data, and the user information database is used to store location information and behavior information of all users who are playing the game while the first user is playing the game, and corresponding sensor data. Optionally, the receiving module 1005 is connected to the third sending module 1004.

The functional modules or units of the first terminal device in this embodiment may be used to implement the corresponding processes in the embodiments shown in FIG. 4 to FIG. 6. The detailed working principles thereof are not further described herein. For details, reference may be made to the description in the method embodiments.

The first terminal device provided in this embodiment obtains location information and behavior information of a user and sensor data of each sensor on the terminal device in a process of a game, and provides them to the server; and the server annotates the location information and the behavior information of the user and the sensor data to obtain annotation data of the user. In this manner of obtaining annotation data of the user in the process of the game of the user, plenty of richer annotation data can be obtained, which is conducive to the application of user behavior recognition.

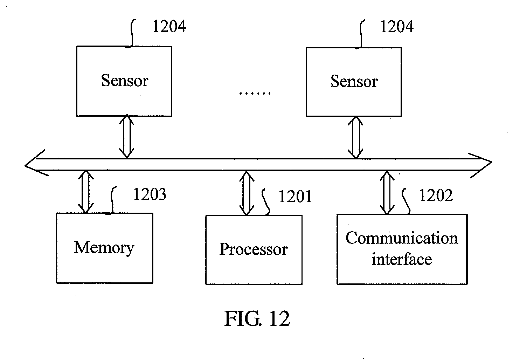

FIG. 12 is a schematic structural diagram of a first terminal device according to another embodiment of the present invention. As shown in FIG. 12, the terminal device in this embodiment includes: a processor 1201, a communication interface 1202, a memory 1203, and a bus. The communication interface 1202, the processor 1201, and the memory 1203 are interconnected through the bus to communicate with each other. The bus may be an ISA bus, a PCI bus, or an EISA bus, and so on. The bus is categorized into an address bus, a data bus, a control bus, and so on. For ease of illustration, the bus is represented by only one bold line in FIG. 12, which, however, does not mean that there is only one bus or only one type of bus.

The memory 1203 is configured to store programs. Specifically, the programs may include program codes, where the program codes include computer operation instructions. The memory 1203 may include a high-speed RAM or a non-volatile memory (non-volatile memory), for example, at least one disk storage.

The processor 1201 is configured to execute the programs to obtain location information of a first user corresponding to the first terminal device, behavior information of the first user, and sensor data of each sensor on the first terminal device in a process of a game. The processor 1201 may obtain the location information of the first user, the behavior information of the first user, and the sensor data of each sensor on the first terminal device through the communication interface 1202. As shown in FIG. 12, the first terminal device in this embodiment further includes at least one sensor 1204. The at least one sensor 1204 includes, but is not limited to, a GPS, an accelerometer, an audio sensor, and an orientation sensor.

The communication interface 1202 is configured to implement communication between the first terminal device and the server, for example, send the location information of the first user, the behavior information of the first user, and the sensor data of each sensor on the first terminal device, which are obtained by the processor 1201, to the server. The communication interface 1202 may further receive information or data sent by the server.

The first terminal device in this embodiment may be used to implement the corresponding processes in the embodiments shown in FIG. 4 to FIG. 6. The detailed working principles thereof are not further described herein. For details, reference may be made to the description in the method embodiments.

The first terminal device provided in this embodiment obtains location information and behavior information of a user and sensor data of each sensor on the terminal device in a process of a game, and provides them to the server; and the server annotates the location information and the behavior information of the user and the sensor data to obtain annotation data of the user. In this manner of obtaining annotation data of the user in the process of the game of the user, plenty of richer annotation data can be obtained, which is conducive to the application of user behavior recognition.

Persons of ordinary skill in the art may understand that, all or a part of the steps in each of the foregoing method embodiments may be implemented by a program instructing relevant hardware. The aforementioned program may be stored in a computer readable storage medium. When the program runs, the steps of the foregoing method embodiments are performed. The foregoing storage medium includes any medium capable of storing program codes, such as a ROM, a RAM, a magnetic disk, or an optical disk.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, as long as such modifications or replacements do not cause the essence of corresponding technical solutions to depart from the scope of the technical solutions of the embodiments of the present invention.

## Claims

1. A user data annotation method in a system comprising a first terminal, a second terminal, a third terminal and a server, comprising:
1.1 receiving (101), by the server, location information of a first user corresponding to the first terminal device, behavior information of the first user, and sensor data of each sensor on the first terminal device, which are sent by the first terminal device in a process of a game, wherein the behavior information of the first user is information representative of an ongoing action of the first user;
1.2 annotating (102), by the server, the location information of the first user, the behavior information of the first user, and the sensor data to obtain annotation data of the first user; and
wherein after the receiving, by the server, location information of the first user corresponding to the first terminal device, behavior information of the first user, and sensor data of each sensor on the first terminal device, which are sent by the first terminal device in a process of a game, the method comprises:
1.3 receiving (103), by the server, identifier information of the second terminal device invited to the game, which is sent by the first terminal device in the process of the game;
1.4 sending (104), by the server, an invitation notification message to the second terminal device according to the identifier information of the second terminal device to notify the second terminal device of joining the game, and sending the location information of the first user to the second terminal device, whereby a third user corresponding to the third terminal device that chooses to join the game in the second terminal guesses a behavior of the first user and gives guessed behavior information according to the location of the first user provided by the server, the current time and particulars of the first user; and
1.5 receiving (105), by the server, guessed behavior information sent by the third terminal device, comparing the behavior information of the first user with the guessed behavior information, and
1.6 sending a comparison result to the third terminal device so that the third user knows a guess result.

2. The user data annotation method according to claim 1, wherein the receiving, by the server, the location information of the first user corresponding to the first terminal device, the behavior information of the first user, and the sensor data of each sensor on the first terminal device, which are sent by the first terminal device in the process of the game comprises:
receiving, by the server, the location information of the first user, the behavior information of the first user, and the sensor data of each sensor on the first terminal device, which are sent by the first terminal device at an initial stage of the game, wherein the location information of the first user and the behavior information of the first user are input by the first user into the first terminal device according to a prompt at the initial stage of the game.

3. The user data annotation method according to claim 1, wherein the receiving, by the server, the location information of the first user corresponding to the first terminal device, behavior information of the first user, and the sensor data of each sensor on the first terminal device, which are sent by the first terminal device in the process of the game comprises:
receiving, by the server, the sensor data of each sensor on the first terminal device, which is sent by the first terminal device at an initial stage of the game;
predicting, by the server, candidate user location information and candidate user behavior information according to the sensor data;
sending, by the server, the candidate user location information and the candidate user behavior information to the first terminal device so that the first user makes a selection; and
receiving, by the server, the location information of the first user and the behavior information of the first user that are returned by the first terminal device, wherein the location information of the first user is selected by the first user from the candidate user location information through the first terminal device, and the location information of the first user is selected by the first user from the candidate user behavior information through the first terminal device.

4. The user data annotation method according to claim 3, wherein the predicting, by the server, candidate user location information and candidate user behavior information according to the sensor data comprises:
obtaining, by the server according to the sensor data, sensor data for location prediction and sensor data for behavior prediction that correspond to the first user; and
recognizing, by the server according to a pre-stored mapping relationship between semantic locations and behaviors and the sensor data, the sensor data for location prediction and the sensor data for behavior prediction to obtain the candidate user location information and the candidate user behavior information.

5. A system for user data annotation including a first terminal, a second terminal, a third terminal and a server, the server comprising:
5.1 a first receiving module (71), configured to receive location information of a first user corresponding to the first terminal device, behavior information of the first user, and sensor data of each sensor on the first terminal device, which are sent by the first terminal device in a process of a game, wherein the behavior information of the first user is information representative of an ongoing action of the first user;
5.2 an annotation obtaining module (72), configured to annotate the location information of the first user, the behavior information of the first user, and the sensor data that are received by the first receiving module (71) to obtain annotation data of the first user;
wherein the server further includes:
5.3 a second receiving module, configured to: after the first receiving module (71) receives the location information of the first user, the behavior information of the first user, and the sensor data, receive identifier information of the second terminal device invited to the game, which is sent by the first terminal device in the process of the game;
5.4 a first sending module, configured to send an invitation notification message to the second terminal device according to the identifier information of the second terminal device to notify the second terminal device of joining the game, and send the location information of the first user to the second terminal device, whereby a third user corresponding to the third terminal device that chooses to join the game in the second terminal guesses a behavior of the first user and gives guessed behavior information according to the location of the first user provided by the server, the current time and particulars of the first user;
5.5 a third receiving module, configured to receive the guessed behavior information sent by the third terminal device, and compare the behavior information of the first user with the guessed behavior information; and
5.6 a second sending module, configured to send a comparison result of the third receiving module to the third terminal device.

6. The system according to claim 5, wherein the first receiving module (71) is specifically configured to receive the location information of the first user, the behavior information of the first user, and the sensor data of each sensor on the first terminal device, which are sent by the first terminal device at an initial stage of the game, wherein the location information of the first user and the behavior information of the first user are input by the first user into the first terminal device according to a prompt at the initial stage of the game.

7. The system according to claim 5, wherein the first receiving module (71) comprises:
a first receiving unit (711), configured to receive the sensor data of each sensor on the first terminal device, which is sent by the first terminal device at an initial stage of the game;
a predicting unit (712), configured to predict candidate user location information and candidate user behavior information according to the sensor data after the first receiving unit (711) receives the sensor data;
a sending unit (713), configured to send the candidate user location information and the candidate user behavior information to the first terminal device so that the first user makes a selection; and
a second receiving unit (714), configured to receive the location information of the first user and the behavior information of the first user that are returned by the first terminal device, wherein the location information of the first user is selected by the first user from the candidate user location information through the first terminal device, and the location information of the first user is selected by the first user from the candidate user behavior information through the first terminal device.

## Patentansprüche

1. Verfahren zur Annotation von Benutzerdaten in einem System mit einem ersten Endgerät, einem zweiten Endgerät, einem dritten Endgerät und einem Server, umfassend:
1.1 Empfangen (101) durch den Server von Aufenthaltsortsinformationen eines ersten Benutzers, der dem ersten Endgerät entspricht, Verhaltensinformationen des ersten Benutzers und Sensordaten jedes Sensors im ersten Endgerät, die durch das erste Endgerät in einem Verlauf eines Spiels gesendet werden, wobei die Verhaltensinformationen des ersten Benutzers Informationen sind, die für eine laufende Aktion des ersten Benutzers repräsentativ sind;
1.2 Annotieren (102) durch den Server der Aufenthaltsortsinformationen des ersten Benutzers, der Verhaltensinformationen des ersten Benutzers und der Sensordaten, um Annotationsdaten des ersten Benutzers zu erhalten; und
wobei das Verfahren nach dem Empfangen durch den Server von Aufenthaltsortsinformationen des ersten Benutzers, der dem ersten Endgerät entspricht, Verhaltensinformationen des ersten Benutzers und Sensordaten jedes Sensors im ersten Endgerät, die durch das erste Endgerät in einem Verlauf eines Spiels gesendet werden, umfasst:
1.3 Empfangen (103) durch den Server von Kennungsinformationen des zweiten zum Spiel eingeladenen Endgeräts, die durch das erste Endgerät im Verlauf des Spiels gesendet werden;
1.4 Senden (104) durch den Server einer Einladungsbenachrichtigungsnachricht an das zweite Endgerät gemäß den Kennungsinformationen des zweiten Endgeräts, um das zweite Endgerät zu benachrichtigen, am Spiel teilzunehmen, und Senden der Aufenthaltsortsinformationen des ersten Benutzers an das zweite Endgerät, wodurch ein dritter Benutzer, der dem dritten Endgerät entspricht und der wählt, am Spiel im zweiten Endgerät teilzunehmen, ein Verhalten des ersten Benutzers vermutet und vermutete Verhaltensinformationen gemäß dem durch den Server bereitgestellten Aufenthaltsort des ersten Benutzers, der aktuellen Zeit und Einzelheiten des ersten Benutzers angibt; und
1.5 Empfangen (105) durch den Server von vermuteten Verhaltensinformationen, die durch das dritte Endgerät gesendet werden, Vergleichen der Verhaltensinformationen des ersten Benutzers mit den vermuteten Verhaltensinformationen, und
1.6 Senden einer Vergleichsergebnisses an das dritte Endgerät, damit der dritte Benutzer ein Vermutungsergebnis erfährt.

2. Verfahren zur Annotation von Benutzerdaten nach Anspruch 1, wobei das Empfangen durch den Server der Aufenthaltsortsinformationen des ersten Benutzers, der dem ersten Endgerät entspricht, der Verhaltensinformationen des ersten Benutzers und der Sensordaten jedes Sensors im ersten Endgerät, die durch das erste Endgerät im Verlauf des Spiels gesendet werden, umfasst:
Empfangen durch den Server der Aufenthaltsortsinformationen des ersten Benutzers, der Verhaltensinformationen des ersten Benutzers und der Sensordaten jedes Sensors im ersten Endgerät, die durch das erste Endgerät in einer Anfangsphase des Spiels gesendet werden, wobei die Aufenthaltsortsinformationen des ersten Benutzers und die Verhaltensinformationen des ersten Benutzers durch den ersten Benutzer gemäß einer Aufforderung in der Anfangsphase des Spiels in das erste Endgerät eingegeben werden.

3. Verfahren zur Annotation von Benutzerdaten nach Anspruch 1, wobei das Empfangen durch den Server der Aufenthaltsortsinformationen des ersten Benutzers, der dem ersten Endgerät entspricht, der Verhaltensinformationen des ersten Benutzers und der Sensordaten jedes Sensors im ersten Endgerät, die durch das erste Endgerät im Verlauf des Spiels gesendet werden, umfasst:
Empfangen durch den Server der Sensordaten jedes Sensors im ersten Endgerät, die durch das erste Endgerät in einer Anfangsphase des Spiels gesendet werden;
Vorhersagen durch den Server von Kandidaten-Benutzeraufenthaltsortsinformationen und Kandidaten-Benutzerverhaltensinformationen gemäß den Sensordaten;
Senden durch den Server der Kandidaten-Benutzeraufenthaltsortsinformationen und der Kandidaten-Benutzerverhaltensinformationen an das erste Endgerät, damit der Benutzer eine Auswahl trifft; und
Empfangen durch den Server der Aufenthaltsortsinformationen des ersten Benutzers und der Verhaltensinformationen des ersten Benutzers, die durch das erste Endgerät zurückgesendet werden, wobei die Aufenthaltsortsinformationen des ersten Benutzers durch den ersten Benutzer aus den Kandidaten-Benutzeraufenthaltsortsinformationen durch das erste Endgerät ausgewählt werden, und die Aufenthaltsortsinformationen des ersten Benutzers durch den ersten Benutzer aus den Kandidaten-Benutzerverhaltensinformationen durch das erste Endgerät ausgewählt werden.

4. Verfahren zur Annotation von Benutzerdaten nach Anspruch 3, wobei das Vorhersagen durch den Server von Kandidaten-Benutzeraufenthaltsortsinformationen und Kandidaten-Benutzerverhaltensinformationen gemäß den Sensordaten umfasst:
Erhalten durch den Server gemäß den Sensordaten von Sensordaten zur Aufenthaltsortsvorhersage und Sensordaten zur Verhaltensvorhersage, die dem ersten Benutzer entsprechen; und
Erkennen durch den Server gemäß einer im Voraus gespeicherten Zuordnungsbeziehung zwischen semantischen Aufenthaltsorten und Verhaltensweisen und den Sensordaten der Sensordaten zur Aufenthaltsortsvorhersage und der Sensordaten zur Verhaltensvorhersage, um die Kandidaten-Benutzeraufenthaltsortsinformationen und Kandidaten-Benutzerverhaltensinformationen zu erhalten.

5. System zur Annotation von Benutzerdaten, das ein erstes Endgerät, ein zweites Endgerät, ein drittes Endgerät und einen Server umfasst, wobei der Server umfasst:
5.1 ein erstes Empfangsmodul (71), das so konfiguriert ist, dass es Aufenthaltsortsinformationen eines ersten Benutzers, der dem ersten Endgerät entspricht, Verhaltensinformationen des ersten Benutzers und Sensordaten jedes Sensors im ersten Endgerät, die durch das erste Endgerät in einem Verlauf eines Spiels gesendet werden, empfängt, wobei die Verhaltensinformationen des ersten Benutzers Informationen sind, die für eine laufende Aktion des ersten Benutzers repräsentativ sind;
5.2 ein Annotationserhaltungsmodul (72), das so konfiguriert ist, dass es die Aufenthaltsortsinformationen des ersten Benutzers, die Verhaltensinformationen des ersten Benutzers und die Sensordaten, die durch das erste Empfangsmodul (71) empfangen werden, annotiert, um Annotationsdaten des ersten Benutzers zu erhalten;
wobei der Server ferner umfasst:
5.3 ein zweites Empfangsmodul, das konfiguriert ist zum: Empfangen von Kennungsinformationen des zweiten zum Spiel eingeladenen Endgeräts, die durch das erste Endgerät im Verlauf des Spiels gesendet werden, nach dem Empfangen der Aufenthaltsortsinformationen des ersten Benutzers, der Verhaltensinformationen des ersten Benutzers und der Sensordaten durch das erste Empfangsmodul (71);
5.4 ein erstes Sendemodul das so konfiguriert ist, dass es eine Einladungsbenachrichtigungsnachricht gemäß den Kennungsinformationen des zweiten Endgeräts an das zweite Endgerät sendet, um das zweite Endgerät zu benachrichtigen, am Spiel teilzunehmen, und die Aufenthaltsortsinformationen des ersten Benutzers an das zweite Endgerät sendet, wodurch ein dritter Benutzer, der dem dritten Endgerät entspricht und der wählt, am Spiel im zweiten Endgerät teilzunehmen, ein Verhalten des ersten Benutzers vermutet und vermutete Verhaltensinformationen gemäß dem durch den Server bereitgestellten Aufenthaltsort des ersten Benutzers, der aktuellen Zeit und Einzelheiten des ersten Benutzers angibt;
5.5 ein drittes Empfangsmodul, das so konfiguriert ist, dass es die vermuteten Verhaltensinformationen, die durch das dritte Endgerät gesendet werden, empfängt und die Verhaltensinformationen des ersten Benutzers mit den vermuteten Verhaltensinformationen vergleicht; und
5.6 ein zweites Sendemodul, das zum Senden des Vergleichsergebnisses des dritten Empfangsmoduls an das dritte Endgerät konfiguriert ist.

6. System nach Anspruch 5, wobei das erste Empfangsmodul (71) insbesondere so konfiguriert ist, dass es die Aufenthaltsortsinformationen des ersten Benutzers, die Verhaltensinformationen des ersten Benutzers und die Sensordaten jedes Sensors im ersten Endgerät, die durch das erste Endgerät in einer Anfangsphase des Spiels gesendet werden, empfängt, wobei die Aufenthaltsortsinformationen des ersten Benutzers und die Verhaltensinformationen des ersten Benutzers durch den ersten Benutzer gemäß einer Aufforderung in der Anfangsphase des Spiels in das erste Endgerät eingegeben werden.

7. System nach Anspruch 5, wobei das erste Empfangsmodul (71) umfasst:
eine erste Empfangseinheit (711), die so konfiguriert ist, dass sie die Sensordaten jedes Sensors im ersten Endgerät, die durch das erste Endgerät in einer Anfangsphase des Spiels gesendet werden, empfängt;
eine Vorhersageeinheit (712), die so konfiguriert ist, dass sie nach dem Empfangen der Sensordaten durch die erste Empfangseinheit (711) Kandidaten-Benutzeraufenthaltsortsinformationen und Kandidaten-Benutzerverhaltensinformationen gemäß den Sensordaten vorhersagt;
eine Sendeeinheit (713), die so konfiguriert ist, dass sie die Kandidaten-Benutzeraufenthaltsortsinformationen und die Kandidaten-Benutzerverhaltensinformationen an das erste Endgerät sendet, damit der Benutzer eine Auswahl trifft; und
eine zweite Empfangseinheit (714), die so konfiguriert ist, dass sie die Aufenthaltsortsinformationen des ersten Benutzers und die Verhaltensinformationen des ersten Benutzers, die durch das erste Benutzerendgerät zurückgesendet werden, empfängt, wobei die Aufenthaltsortsinformationen des ersten Benutzers durch den ersten Benutzer aus den Kandidaten-Benutzeraufenthaltsortsinformationen durch das erste Endgerät ausgewählt werden, und die Aufenthaltsortsinformationen des ersten Benutzers durch den ersten Benutzer aus den Kandidaten-Benutzerverhaltensinformationen durch das erste Endgerät ausgewählt werden.

## Revendications

1. Procédé d'annotation de données utilisateur dans un système comprenant un premier terminal, un deuxième terminal, un troisième terminal et un serveur, comprenant :
1.11a réception (101), par le serveur, d'informations de position d'un premier utilisateur correspondant au premier dispositif terminal, d'informations de comportement du premier utilisateur, et de données de capteur de chaque capteur sur le premier dispositif terminal, lesquelles sont envoyées par le premier dispositif terminal lors d'un jeu, dans lequel les informations de comportement du premier utilisateur sont des informations représentatives d'une action en cours du premier utilisateur ;
1.2 l'annotation (102), par le serveur, des informations de position du premier utilisateur, des informations de comportement du premier utilisateur, et des données de capteur pour obtenir des données d'annotation du premier utilisateur ; et
le procédé comprenant, après la réception, par le serveur, d'informations de position du premier utilisateur correspondant au premier dispositif terminal, d'informations de comportement du premier utilisateur, et de données de capteur de chaque capteur sur le premier dispositif terminal, lesquelles sont envoyées par le premier dispositif terminal lors d'un jeu :
1.3 la réception (103), par le serveur, d'informations d'identifiant du deuxième dispositif terminal invité au jeu, lesquelles sont envoyées par le premier dispositif terminal lors du jeu ;
1.4 l'envoi (104), par le serveur, d'un message de notification d'invitation au deuxième dispositif terminal conformément aux informations d'identifiant du deuxième dispositif terminal pour notifier au deuxième dispositif terminal de se joindre au jeu, et l'envoi des informations de position du premier utilisateur au deuxième dispositif terminal, moyennant quoi un troisième utilisateur correspondant au troisième dispositif terminal qui choisit de se joindre au jeu dans le deuxième terminal devine un comportement du premier utilisateur et donne des informations de comportement deviné conformément à la position du premier utilisateur fournie par le serveur, l'heure actuelle et les informations personnelles du premier utilisateur ; et
1.5 la réception (105), par le serveur, d'informations de comportement deviné envoyées par le troisième dispositif terminal, la comparaison des informations de comportement du premier utilisateur aux informations de comportement deviné, et
1.6 l'envoi d'un résultat de comparaison au troisième dispositif terminal de telle sorte que le troisième utilisateur connaisse un résultat deviné.

2. Procédé d'annotation de données utilisateur selon la revendication 1, dans lequel la réception, par le serveur, des informations de position du premier utilisateur correspondant au premier dispositif terminal, des informations de comportement du premier utilisateur, et des données de capteur de chaque capteur sur le premier dispositif terminal, lesquelles sont envoyées par le premier dispositif terminal lors du jeu, comprend :
la réception, par le serveur, des informations de position du premier utilisateur, des informations de comportement du premier utilisateur, et des données de capteur de chaque capteur sur le premier dispositif terminal, lesquelles sont envoyées par le premier dispositif terminal à un stade initial du jeu, dans lequel les informations de position du premier utilisateur et les informations de comportement du premier utilisateur sont entrées par le premier utilisateur dans le premier dispositif terminal conformément à une invite au stade initial du jeu.

3. Procédé d'annotation de données utilisateur selon la revendication 1, dans lequel la réception, par le serveur, des informations de position du premier utilisateur correspondant au premier dispositif terminal, des informations de comportement du premier utilisateur, et des données de capteur de chaque capteur sur le premier dispositif terminal, lesquelles sont envoyées par le premier dispositif terminal lors du jeu, comprend :
la réception, par le serveur, des données de capteur de chaque capteur sur le premier dispositif terminal, lesquelles sont envoyées par le premier dispositif terminal à un stade initial du jeu ;
la prédiction, par le serveur, d'informations de position d'utilisateur candidat et d'informations de comportement d'utilisateur candidat conformément aux données de capteur ;
l'envoi, par le serveur, des informations de position d'utilisateur candidat et des informations de comportement d'utilisateur candidat au premier dispositif terminal de telle sorte que le premier utilisateur fasse une sélection ; et
la réception, par le serveur, des informations de position du premier utilisateur et des les informations de comportement du premier utilisateur qui sont renvoyées par le premier dispositif terminal, dans lequel les informations de position du premier utilisateur sont sélectionnées par le premier utilisateur à partir des informations de position d'utilisateur candidat par le biais du premier dispositif terminal, et les informations de position du premier utilisateur sont sélectionnées par le premier utilisateur à partir des informations de comportement d'utilisateur candidat par le biais du premier dispositif terminal.

4. Procédé d'annotation de données utilisateur selon la revendication 3, dans lequel la prédiction, par le serveur, d'informations de position d'utilisateur candidat et d'informations de comportement d'utilisateur candidat conformément aux données de capteur comprend :
l'obtention, par le serveur conformément aux données de capteur, de données de capteur pour une prédiction de position et de données de capteur pour une prédiction de comportement qui correspondent au premier utilisateur ; et
la reconnaissance, par le serveur, conformément à une relation de mise en correspondance prémémorisée entre des positions et comportements sémantiques et des données de capteur, de données de capteur de prédiction de position et de données de capteur de prédiction de comportement pour obtenir les informations de position d'utilisateur candidat et les informations de comportement d'utilisateur candidat.

5. Système d'annotation de données utilisateur comportant un premier terminal, un deuxième terminal, un troisième terminal et un serveur, le serveur comprenant :
5.1 un premier module de réception (71), configuré pour recevoir des informations de position d'un premier utilisateur correspondant au premier dispositif terminal, des informations de comportement du premier utilisateur, et des données de capteur de chaque capteur sur le premier dispositif terminal, lesquelles sont envoyées par le premier dispositif terminal lors d'un jeu, dans lequel les informations de comportement du premier utilisateur sont des informations représentatives d'une action en cours du premier utilisateur ;
5.2 un module d'obtention d'annotations (72), configuré pour annoter les informations de position du premier utilisateur, les informations de comportement du premier utilisateur, et les données de capteur qui sont reçues par le premier module de réception (71) pour obtenir des données d'annotation du premier utilisateur ;
dans lequel le serveur comporte en outre :
5.3 un second module de réception, configuré pour : après que le premier module de réception (71) reçoit les informations de position du premier utilisateur, les informations de comportement du premier utilisateur, et les données de capteur, recevoir des informations d'identifiant du deuxième dispositif terminal invité au jeu, lesquelles sont envoyées par le premier dispositif terminal lors du jeu ;
5.4 un premier module d'envoi, configuré pour envoyer un message de notification d'invitation au deuxième dispositif terminal conformément aux informations d'identifiant du deuxième dispositif terminal pour notifier au deuxième dispositif terminal de se joindre au jeu, et envoyer les informations de position du premier utilisateur au deuxième dispositif terminal, moyennant quoi un troisième utilisateur correspondant au troisième dispositif terminal qui choisit de se joindre au jeu dans le deuxième terminal devine un comportement du premier utilisateur et donne des informations de comportement deviné conformément à la position du premier utilisateur fournie par le serveur, l'heure actuelle et les informations personnelles du premier utilisateur ;
5.5 un troisième module de réception, configuré pour recevoir les informations de comportement deviné envoyées par le troisième dispositif terminal, et comparer les informations de comportement du premier utilisateur aux informations de comportement deviné ; et
5.6 un second module d'envoi, configuré pour envoyer un résultat de comparaison du troisième module de réception au troisième dispositif terminal.

6. Système selon la revendication 5, dans lequel le premier module de réception (71) est configuré spécifiquement pour recevoir les informations de position du premier utilisateur, les informations de comportement du premier utilisateur, et les données de capteur de chaque capteur sur le premier dispositif terminal, lesquelles sont envoyées par le premier dispositif terminal à un stade initial du jeu, dans lequel les informations de position du premier utilisateur et les informations de comportement du premier utilisateur sont entrées par le premier utilisateur dans le premier dispositif terminal conformément à une invite au stade initial du jeu.

7. Système selon la revendication 5, dans lequel le premier module de réception (71) comprend :
une première unité de réception (711), configurée pour recevoir les données de capteur de chaque capteur sur le premier dispositif terminal, lesquelles sont envoyées par le premier dispositif terminal à un stade initial du jeu ;
une unité de prédiction (712), configurée pour prédire des informations de position d'utilisateur candidat et des informations de comportement d'utilisateur candidat conformément aux données de capteur après que la première unité de réception (711) reçoit les données de capteur ;
une unité d'envoi (713), configurée pour envoyer les informations de position d'utilisateur candidat et les informations de comportement d'utilisateur candidat au premier dispositif terminal de telle sorte que le premier utilisateur fasse une sélection; et
une seconde unité de réception (714), configurée pour recevoir les informations de position du premier utilisateur et les informations de comportement du premier utilisateur qui sont renvoyées par le premier dispositif terminal, dans lequel les informations de position du premier utilisateur sont sélectionnées par le premier utilisateur à partir des informations de position d'utilisateur candidat par le biais du premier dispositif terminal, et les informations de position du premier utilisateur sont sélectionnées par le premier utilisateur à partir des informations de comportement d'utilisateur candidat par le biais du premier dispositif terminal.
